**Europäisches Patentamt**

**European Patent Office**

**Office européen des brevets**

(19)

(11) Veröffentlichungsnummer: **0 012 872**
**B1**

(12)

# EUROPÄISCHE PATENTSCHRIFT

(45) Veröffentlichungstag der Patentschrift:
**22.12.82**

(51) Int. Cl.³: **A 61 C 1/12,** A 61 C 1/10

(21) Anmeldenummer: **79104778.0**

(22) Anmeldetag: **29.11.79**

(54) **Zahnärztliche Handstückanordnung.**

(30) Priorität: **22.12.78 DE 2855797**

(43) Veröffentlichungstag der Anmeldung:
**09.07.80 Patentblatt 80/14**

(45) Bekanntmachung des Hinweises auf die Patenterteilung:
**22.12.82 Patentblatt 82/51**

(84) Benannte Vertragsstaaten:
**AT CH FR GB IT SE**

(56) Entgegenhaltungen:
**DE-A-2 717 013**
**DE-B-1 219 170**
**DE-B-1 279 892**
**DE-B-1 295 129**
**DE-C-477 286**
**US-A-4 121 342**

(73) Patentinhaber: **SIEMENS AKTIENGESELLSCHAFT**
**Berlin und München, Postfach 22 02 61,**
**D-8000 München 22 (DE)**

(72) Erfinder: **Straihammer, Reinhard, In der Hollerhecke 10,**
**D-6141 Einhausen (DE)**
Erfinder: **Klose, Hans-Jürgen, Gleiwitzerstrasse 44,**
**D-6944 Hemsbach (DE)**
Erfinder: **Schuss, Werner, In der Lahrbach 18,**
**D-6148 Heppenheim (DE)**

## Zahnärztliche Handstückanordnung

Die Erfindung bezieht sich auf eine zahnärztliche Handstückanordnung mit wenigstens zwei mit ihren Achsen unter einem Winkel zueinander angeordneten Triebwellenabschnitten zur Übertragung der Drehbewegung von einem Antriebsmotor auf eine in einem Kopfteil drehbar gelagerte Aufnahmehülse für ein Werkzeug, wobei zumindest einer der beiden Triebwellenabschnitte zwei gleichachsige Triebzahnräder mit unterschiedlicher Zähnezahl aufweist, von denen ein Triebzahnrad jewells in Eingriff steht mit einem Triebzahnrad des benachbarten Triebwellenabschnittes und wobei Mittel vorhanden sind, durch die dieser Zahneingriff aufgehoben und mit dem anderen Triebzahnrad ein anderer Zahneingriff hergestellt werden kann.

Bei einem bekannten zahnärztlichen Handstück (DE-AS 1 219 170) ist die von einem Antriebsmotor angetriebene Triebachse entlang der Längsachse des Handstückes einmal quergeteilt, so dass zwei Triebwellenabschnitte mit dazwischenliegenden Getriebeverzahnungen gebildet werden. Die Getriebeverzahnungen bestehen aus zwei am Ende des einen Triebwellenabschnittes im wesentlichen in einer Ebene angeordneten gleichachsigen Triebzahnrädern mit untereinander verschiedener Zähnezahl und einem am Ende des anderen Triebachsenabschnittes angeordneten einzelnen Triebzahnrad. Durch Auswechseln oder Verstellen des vorderen Handstückteils, des Kopfteils, wird eine Über- oder Untersetzung der Antriebsdrehzahl erreicht, wobei mit dem Auswechseln bzw. Verstellen eine Umschaltung der Drehzahl der Triebachse lediglich in einer Übertragungsrichtung vorgenommen werden kann, also beispielsweise nur von einer Direktübertragung mit dem Übersetzungsverhältnis 1 : 1, auf eine Übersetzung mit einem Übersetzungsverhältnis von beispielsweise 1 : 3 oder von einer Direktübertragung auf eine Untersetzung mit einem Untersetzungsverhältnis von beispielsweise 3 : 1. Im Falle einer Untersetzung befindet sich das umschaltbare Getriebe mit den beiden gleichachsigen Triebzahnrädern am abnehmbaren Kopfteil, im Falle einer Übersetzung befinden sich diese Getriebeteile am antriebsseitigen Handstückteil. Für eine Übersetzung und eine Untersetzung der Drehzahlen sind demnach verschiedene Antriebsmotoren bzw. antriebsseitige Handstückteile mit entsprechend ausgelegten Triebwellenabschnitten vorzusehen. Nachdem der Zahnarzt sowohl mit unter- als auch mit übersetzter Antriebsdrehzahl arbeitet, muss er gemäss der bekannten Handstückanordnung mehrere Antriebsmotoren bzw. antriebsseitige Handstückteile haben.

Ein weiterer Nachteil bei einer solchen Handstückanordnung ist, dass die zur Getriebeabstufung erforderlichen Zahnräder den Aussendurchmesser allgemein, insbesondere aber bei Winkelstücken im Bereich der Knickstelle, stark vergrössern, ferner dass (wegen der Umsteckmöglichkeit des Kopfteils) keine Verdrehung des Handstückes gegenüber dem Antriebsteil möglich ist. Der bei den Winkelstücken gegebene und in der Praxis sich als zweckmässig erweisende Kontraknick von etwa 20° gegenüber der Handstücklängsachse verläuft ausserdem zu abrupt, wodurch, insbesondere in Verbindung mit der bereits angesprochenen Verdickung in diesem Bereich, die Handhabbarkeit des Handstückes zu wünschen übrig lässt.

Aufgabe der vorliegenden Erfindung ist es, eine demgegenüber verbesserte und vereinfachte Handstückanordnung zu schaffen, insbesondere mit dem Ziel, mit einem einzigen Antriebsteil sowohl eine Untersetzung als auch eine Übersetzung und gegebenenfalls eine Direktübertragung der Antriebsdrehzahl auf das Werkzeug zu bekommen. Darüber hinaus ist anzustreben, den Aussendurchmesser insbesondere im Bereich der Getriebeabstufung verringern zu können und einen weicheren Übergang im Bereich des Kontraknicks bei Winkelhandstücken zu schaffen.

Die gestellte Aufgabe wird bei einer Handstückanordnung der eingangs genannten Art gemäss der Erfindung dadurch gelöst, dass zur Erzielung einer Getriebeabstufung einer der Triebwellenabschnitte in Richtung seiner Achse verschiebbar gelagert ist, wobei durch eine Verschiebung des Triebwellenabschnittes der eine der gleichachsigen Triebzahnräder mit einem Triebzahnrad des benachbarten Triebwellenabschnittes ausser und der andere in Eingriff kommt.

Vorteilhafte Weiterbildungen und Ausgestaltungen sind in den Unteransprüchen enthalten.

Das gemäss der Erfindung vorgeschlagene Verschiebegetriebe schafft die Voraussetzung, dafür, mit einem einzigen Antriebsteil sowohl eine Unter- als auch eine Übersetzung der Drehzahl und gegebenenfalls auch eine Direktübertragung im Verhältnis 1 : 1 erzielen zu können, ohne das Handstück mit allen Triebteilen mit auswechseln zu müssen, wie dies bei Handstücken bisheriger Bauart der Fall ist. Dadurch, dass man den Bereich des Zahneingriffes des antriebsseitigen Triebwellenabschnittes mit dem verschiebbaren Triebwellenabschnitt relativ nahe an das Antriebsteil verlegt, wie gemäss einer vorteilhaften Ausgestaltung der Erfindung vorgesehen ist, kann die Handstückanordnung sehr schlank gestaltet werden. Bei einem gewünschten Wechsel der Unter- oder Übersetzung brauchen gemäss einer weiteren vorteilhaften Ausgestaltung der Erfindung lediglich die Kopfteile ausgewechselt zu werden; wesentliche Getriebe- und Lagerteile im Bereich des Handstückes verbleiben am Antriebsteil.

Gemäss einer weiteren vorteilhaften Ausführungsform erfolgt die Getriebeabstufung am Kontraknick in zwei Stufen, wobei sich die Mittelachsen der Triebwellenabschnitte von Antriebsmotor und Kopfteil mit der eines dazwischenliegenden Triebwellenabschnittes unter einem Winkel von jeweils ca.10° schneiden. Dadurch wird einerseits ein besonders weicher Übergang vom geraden Handstückteil auf das Kopfteil erzielt und anderseits Platz gewonnen, der zur Durchführung von Kühlmedienleitungen genutzt werden kann.

Weitere Vorteile ergeben sich aus der nachstehenden Beschreibung zweier Ausführungsbeispiele der Erfindung.

Es zeigen:

Fig. 1 eine zahnärztliche Handstückanordnung der erfindungsgemässen Art, mit einem Antriebsmotor und einem Winkelhandstück, in schaubildlicher Ansicht.

Fig. 2 einen Teil der erfindungsgemässen Handstückanordnung im Längsschnitt,

Fig. 3 bis 5 zwei abgewinkelte und ein gerades Kopfteil im Längsschnitt,

Fig. 6 einen Querschnitt des Handstückes entlang der Linie VI/VI in Fig. 2,

Fig. 7 eine Rastvorrichtung zur Verbindung der in Fig. 2 und 10 gezeigten Handstückteile in vereinfachter schaubildlicher Darstellung,

Fig. 8 und 9 einen Teil der in Fig. 7 gezeigten Rastvorrichtung in zwei Stellungen,

Fig. 10 ein anderes Ausführungsbeispiel der Erfindung,

Fig. 11 Teile der in Fig. 10 gezeigten Handstückausführung in einer anderen Getriebestellung,

Fig. 12 einen Ausschnitt einer Handstückanordnung mit einem geraden Handstück.

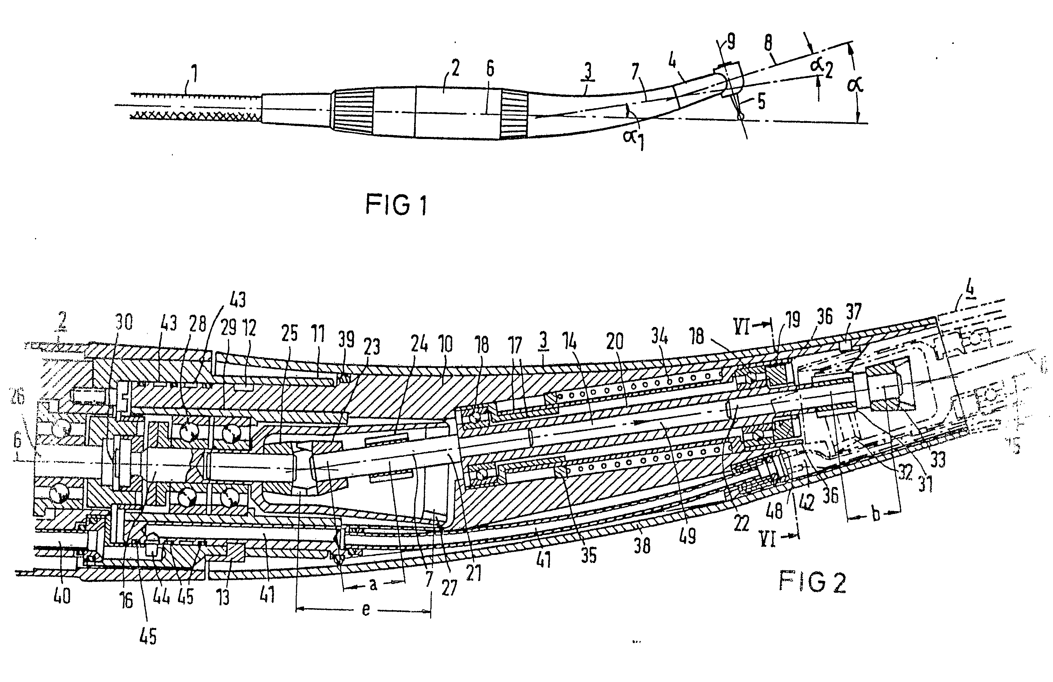

Die Fig. 1 zeigt in einer schaubildlichen Darstellung eine zahnärztliche Handstückanordnung mit einem an einen Versorgungsschlauch 1 angeschlossenen Antriebsmotor 2 und einem sich daran anschliessenden Handstück 3. Das Handstück 3 enthält ein Kopfteil 4 mit einem nicht näher bezeichneten Kopfgehäuse, in dem ein Werkzeug 5 drehbar gelagert ist. Zur Übertragung der Drehbewegung vom Antriebsmotor 2 auf das Werkzeug 5 enthält die Handstückanordnung mehrere miteinander in Eingriff befindliche Triebwellenabschnitte, deren Achsen mit den Bezugszeichen 6 bis 9 versehen sind.

Der zwischen den Längssymmetrieachsen von Kopfteil 4 und Antriebsmotor 2 aus arbeitstechnischen Gründen notwendigerweise vorgegebene Neigungswinkel $\alpha$, der in der Regel zwischen 18° und 21° liegt, ist, wie im folgenden noch näher erläutert wird, im Bereich des Handstückes 3 auf zwei Stufen mit den Winkeln $\alpha_1$ und $\alpha_2$ aufgeteilt, wobei sich der Winkel $\alpha_1$ durch den Schnittpunkt der beiden Achsen 7 und 6 und der Winkel $\alpha_2$ durch den Schnittpunkt der Achsen 8 und 7 bestimmt. Die beiden Winkel $\alpha_1$ und $\alpha_2$ sind so bemessen, dass unter Berücksichtigung der erforderlichen Getriebeüber- oder -untersetzung und der aus Festigkeitsgründen erforderlichen Module bzw. Mindestzähnezahlen der Zahnräder durch sie eine harmonische äussere Kontur mit kontinuierlich abnehmendem Aussendurchmesser vom einen zum anderen Handstückende erreicht wird, ohne dass die Handstückanordnung dadurch verlängert wird. Zweckmässig ist es, wenn der eine Einzelwinkel grösser ist als ein Viertel des Gesamtwinkels $\alpha$. Als besonders vorteilhaft hat sich etwa der halbe Winkelbetrag als Einzelwinkel $\alpha_1$ oder $\alpha_2$ erwiesen.

Die Fig. 2 zeigt das Handstück 3 und einen Teil des Antriebsmotors 2 im Längsschnitt. Das Handstück 3 enthält einen Grundkörper (Basisteil) 10, der in eine konzentrisch zur Triebwellenachse 6 angeordnete Führungshülse 11 des Antriebsmotors 2 eingeschoben und dort drehbar, axial aber nicht verschiebbar gelagert ist. Als Führungs- und Feststellmittel für eine axiale Fixierung der Teile zueinander sind an sich bekannte Rast- und Führungsmittel in Form eines in eine Nut 12 des Grundkörpers 10 eingreifenden Rastbolzens 13 vorgesehen.

Im Grundkörper 10 ist ein erster Triebwellenabschnitt 14 längs der Achse 7 verschiebbar gelagert, der einerseits mit einem kopfteilseitigen zweiten Triebwellenabschnitt 15 und anderseits mit einem antriebsseitigen dritten Triebwellenabschnitt 16 in Eingriff steht. Der Triebwellenabschnitt 14 wird im wesentlichen gebildet aus zwei miteinander fest verbundenen äusseren Führungshülsen 17 und einer in Lagern 18, die durch eine Schlitzmutter 19 miteinander verspannt sind, drehbar gelagerten inneren Führungshülse 20, in der bolzenartig Wellen 21 und 22 eingepresst sind. An der Welle 21 sind zwei in einem Abstand a zueinander angeordnete Triebzahnräder 23, 24 befestigt, von denen das eine (23) als Kronenrad und das andere (24) als Stirnrad ausgebildet ist. Das Kronenrad 23 steht in Eingriff mit einem Kronenrad 25 des (dritten) Triebwellenabschnittes 16. Beide Kronenräder haben gleiche Zähnezahl, so dass über diese Verzahnung eine Direktübertragung der Antriebsdrehzahl von der Triebwelle 26 des Antriebsmotors 2 über den Triebwellenabschnitt 16 auf den Triebwellenabschnitt 14 (im Verhältnis 1 : 1) erfolgt. Der Triebwellenabschnitt 16 enthält in einem Abstand e noch ein weiteres gleichachsiges, innen verzahntes Triebzahnrad 27, das, wie später noch erläutert wird, bei Verschiebung des Triebwellenabschnittes 14 in Richtung der Achse 7 mit dem Triebzahnrad 24 in Eingriff kommt.

Der Triebwellenabschnitt 16 ist Bestandteil des Antriebsmotors und mittels Lager 28 in einer Hülse 29 gelagert, die wiederum im Grundkörper 10 fest oder zum Zwecke des Austausches lösbar angeordnet ist. Mit 30 ist eine Kupplung bezeichnet, die den Triebwellenabschnitt 16 mit der Triebwelle 26 des Antriebsmotors 2 verbindet.

An der kopfteilseitigen Welle 22 des Triebwellenabschnittes 14 ist ein Stirnrad 31 angeordnet, welches mit einem in der Darstellung gestrichelt eingezeichneten, innen verzahnten Getrieberad 32 bei aufgesetztem Kopfteil 4 in Eingriff steht. In die Welle 22 ist in einem Abstand b, ähnlich wie bei den Zahnrädern 23, 24, ein Kronenrad 33 bolzenartig eingepresst. Das Kronenrad 33 steht in der gezeichneten Lage ausser Eingriff mit den Getriebeteilen des Triebwellenabschnittes 15.

An der einen äusseren Hülse 17 des Triebwellenabschnittes 14 liegt mit dem einen Ende eine Druckfeder 34, deren anderes Ende sich an einem im Grundkörper 10 eingelegten Ring 35 abstützt. Die Druckfeder 34 versucht den gesamten Triebwellenabschnitt in Richtung Kopfteil zu drücken. Bei abgenommenem Kopfteil liegt der Triebwellenabschnitt mit einer Stirnfläche 36 an einem Anschlagbolzen 37 an. Durch die in Eingriff befindlichen Getriebeteile 23 und 25 wird eine Direktübertragung und durch die Getriebeteile 31, 32 eine Untersetzung der über die Triebwellenabschnitte 16 und 14 vom Antriebsmotor übertragenen Drehzahl erreicht, und zwar in einem Verhältnis von etwa 2,5 : 1. Diese damit untersetzte Drehzahl wird in bekannter Weise dann im Kopfteil 4 durch ein weiteres Untersetzungsgetriebe im Verhältnis 1,2 : 1 nochmals untersetzt, so dass insgesamt eine Untersetzung der Drehzahl im Verhältnis von etwa 3 : 1 erzielt wird.

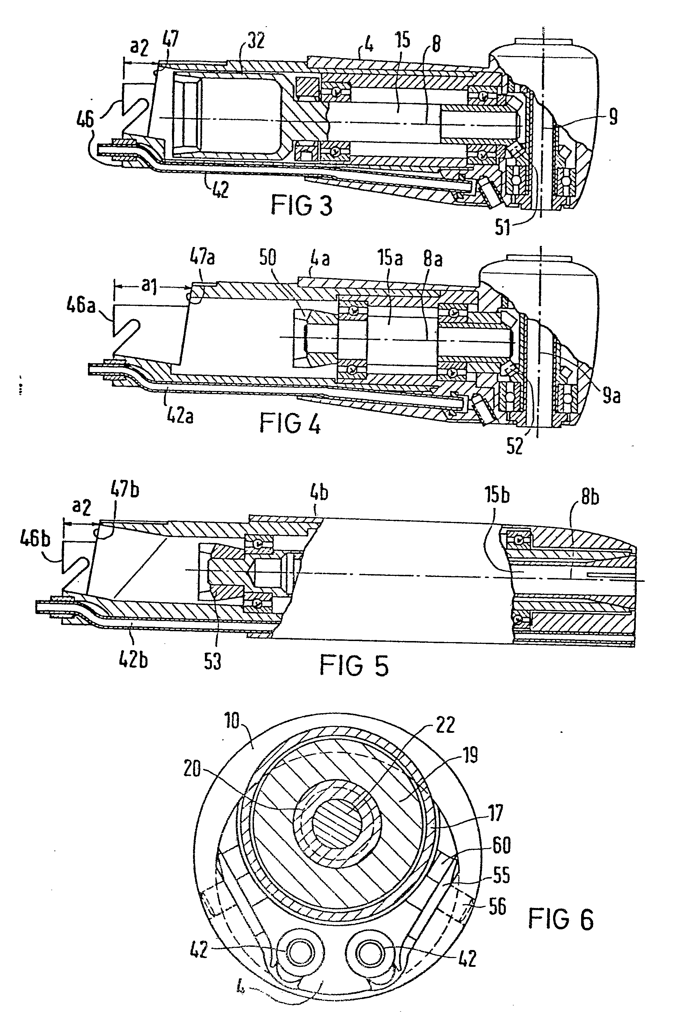

Über den Grundkörper 10 ist eine am Kopfteil 4 befestigte Hülse 38 unter Zwischenlage eines O–Ringes 39 aufgeschoben. Die Hülse 38 ist zusammen mit dem Kopfteil 4 mittels einer im Bereich der Schnittlinie VI/VI befindlichen und in den Fig. 6ff. noch näher dargestellten Rasteinrichtung mit dem Grundkörper 10 lösbar verbunden. Mit dieser Verbindung ist eine axiale Fixierung des Kopfteils 4 am Grundkörper und damit eine axiale Festlegung der für einen Eingriff erforderlichen Abstände der Triebwellenabschnitte gegeben.

Im Grundkörper 10 und im Kopfteil 4 des Handstückes 3 sowie im Antriebsmotor 2 sind Kühlmittelleitungsabschnitte 40, 41 und 42 für die Medien Luft und Wasser angeordnet, wobei in der Darstellung nur die Leitungsabschnitte für ein Medium zu erkennen sind. Die Medienübergabe von Antriebsmotor 2 auf das gegen diesen drehbare Handstück 3 erfolgt in bekannter Weise über Ringkanäle 43 im einen und mit diesen korrespondierenden radialen Kanälen 44 im anderen Teil des Handstückes bzw. Antriebsmotors. Zur Abdichtung der beiden Drehkupplungsstellen sind O–Ring-Dichtungen 45 vorgesehen.

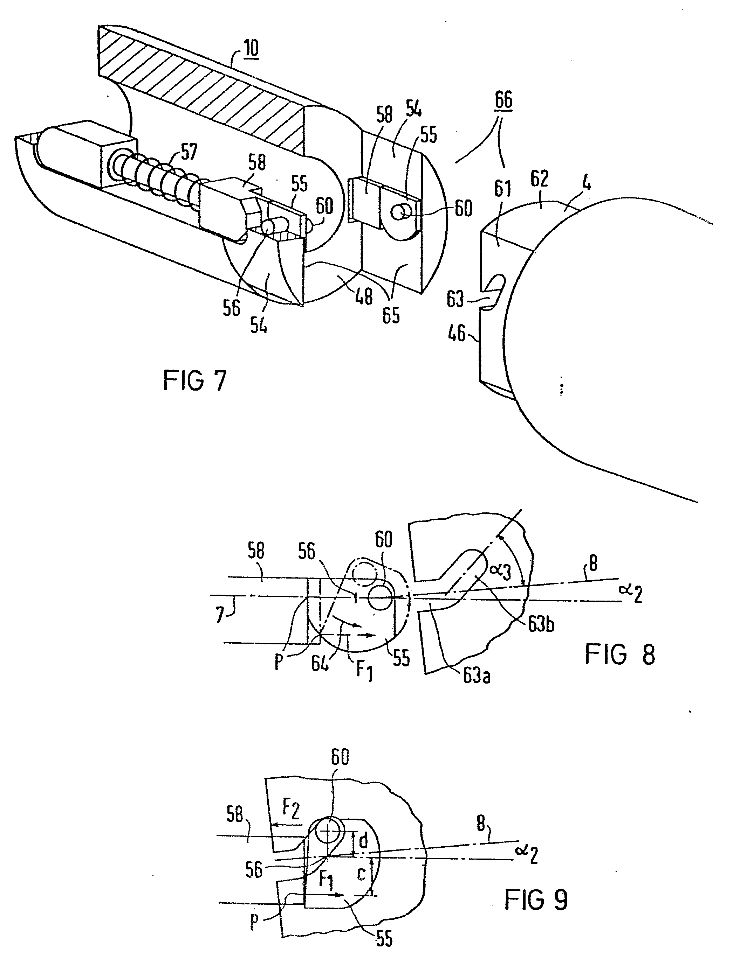

Die Fig. 3 zeigt das in Fig. 2 gestrichelt eingezeichnete Kopfteil 4 im Längsschnitt. Das dem Grundkörper 10 zugewandte stirnseitige Ende ist mit zwei Flächen 46, 47 versehen, von denen bei montiertem Handstück (Fig. 2) die eine (46) an einer Stirnfläche 48 des Grundkörpers 10 anliegt und die andere (47) gegen die Stirnfläche 36 des axial verschiebbaren Triebwellenabschnittes 14 drückt. Über die Flächen 46, 48 wird eine kraftschlüssige Verbindung des Kopfteils 4 mit dem übrigen Handstück, über seitliche Flächen eine Verdrehsicherung (siehe auch Pos. 61 und 65 in Fig. 7) des Kopfteils gegen das Handstück sowie eine Fixierung und Zuordnung der miteinander in Eingriff befindlichen Zahnräder erreicht.

Bei Abnahme des Kopfteils 4 vom Grundkörper 10, was durch Lösen der später noch näher bezeichneten Verriegelungsvorrichtung (Pos. 66) geschieht, wird der gesamte Triebwellenabschnitt 14 in Richtung des Pfeiles 49 (Fig. 2) nach rechts bewegt, bis die Stirnfläche 36 am Anschlagbolzen 37 des Grundkörpers 10 zur Anlage kommt. Durch diese Längsbewegung kommt einerseits die Verzahnung der Kronenräder 23 und 25 ausser Eingriff und die Zahnräder 27 und 24 in Eingriff.

Wird nun auf den Grundkörper 10 ein Kopfteil 4a, wie in Fig. 4 dargestellt, mit einem Triebwellenabschnitt 15a aufgesetzt, welcher an seinem dem Handstück zugewandten Ende ein Kronenrad 50 mit gleicher Zähnezahl wie das Kronenrad 33 aufweist, so rückt die Anlagefläche 36 vom Anschlagbolzen 37 ab. Bei gerastetem Kopfteil liegen die stirnseitigen Flächen 48 und 46a kraftschlüssig aneinander an. Die Druckfeder 34 sorgt dafür, dass der Triebwellenabschnitt 14 mit der Stirnfläche 36 an der Fläche 47a auf Anschlag bleibt. In dieser Position befinden sich dann einerseits die Getriebeteile 24, 27 in Eingriff, wodurch eine Übersetzung der vom Antrieb 2 ausgehenden Drehzahl in einem Verhältnis von 1 : 2,5 erzielt wird; anderseits befinden sich auch die Getriebeteile 33 und 50 in Eingriff und führen wegen gleicher Zähnezahlen zu einer Direktübertragung der Drehzahl im Verhältnis 1 : 1. Im Kopfgehäuse des Kopfteils 4a ist dann in bekannter Weise nochmals eine Getriebeabstufung vorgesehen; im Gegensatz zu dem in Fig. 3 dargestellten Kopfteil 4, wo ein Untersetzungsgetriebe (Pos. 51) vorhanden ist, ist bei dem Kopfteil in Fig. 4 in bekannter Weise ein Übersetzungsgetriebe (Pos. 52) vorhanden, mit dem von der Triebwelle 15 auf das Werkzeug nochmals eine Übersetzung der Drehzahlen im Verhältnis 1 : 1,2 erzielt wird. Insgesamt lässt sich somit von der Antriebswelle 26 bis zum Werkzeug eine Übersetzung der Drehzahlen im Verhältnis 1 : 3 erzielen.

Das Kopfteil 4a ist bis auf die verschiedenen Abstände $a_1$, $a_2$ zwischen den Flächen 46 und 47, die praktisch die Eintauchtiefe der Kopfteile in das übrige Handstück bestimmen, hinsichtlich der äusseren Abmessungen völlig identisch mit dem Kopfteil 4.

Die Fig. 5 zeigt ein weiteres Kopfteil 4b mit gerader Werkzeugführung. Der Abstand $a_2$ der beiden Anlageflächen 46b, 47b ist so bemessen, wie bei der Ausführungsform nach Fig. 3, so dass einerseits die Zahnräder 23 und 25 und anderseits die Zahnräder 33 und 53 miteinander in Eingriff kommen. In Betrachtung der Fig. 2 ergibt sich, dass bei aufgestecktem Kopfteil 4b die Achse 8b parallel versetzt liegt zur Achse 8 in Fig. 2. Wegen der unterschiedlichen Zahnradpaarung sind die Abstände der Zahnräder von den Flächen 46, 46a, 46b bei den verschiedenen Kopfteilkombinationen verschieden gross.

Die Fig. 6 zeigt einen Querschnitt entlang der Linie VI/VI in Fig. 2 und lässt Teile einer in den Fig. 7 bis 9 noch näher dargestellten Rastvorrichtung 66 erkennen, mit Hilfe derer das Kopfteil 4 am Grundkörper 10 des Handstückes durch axiales Zusammenstecken der Teile abnehmbar befestigt werden kann. Der Einfachheit wegen ist in dieser Figur die äussere Hülse 38 nicht dargestellt.

Die Fig. 7 zeigt in einer vereinfachten schaubildlichen Prinzipdarstellung den Aufbau der Rastvorrichtung 66. Der Grundkörper 10 bildet beidseitig Fortsätze 54, in denen beidseitig Scheiben 55 mittels Achsen 56 drehbar gelagert sind. Gegen eine Stirnfläche der Scheiben 55 drückt mit Hilfe der Kraft jeweils einer Druckfeder 57 beidseitig ein im Grundkörper 10 achsparallel geführter Druckbolzen 58.

Die Scheiben 55 sind mit nach innen gerichteten Zapfen 60 versehen, die in beidseitig von Flächen 61 eines Führungsteils 62 des Kopfteils 4 angeordnete Kulissen 63 eingreifen, wenn das Kopfteil 4 auf den Grundkörper 10 axial aufgesteckt wird.

Die Zapfen 60 sind, wie aus den Fig. 8 und 9 ersichtlich ist, in einem Abstand d zur Lagerachse 56 angeordnet. Die Kulisse 63 ist im Führungsteil 62 so angeordnet, dass ein Kulissenschnitt 63a zunächst parallel zur Achse 8 und ein Abschnitt 63b in einem spitzen Winkel ($\alpha_3$) dazu verläuft.

Wird das Kopfteil 4 auf den Grundkörper 10 geschoben, so kommt zunächst der Abschnitt 63a der Kulisse 63 mit dem Zapfen 60 in Eingriff. Der Druckbolzen 58 übt, da die Federkraft in Achsrichtung angreift, in dieser (ungerasteten) Stellung kein Drehmoment auf die Scheibe 55 aus. Bei weiterem axialen Ankuppeln des Kopfteils 4 werden die Zapfen 60 in den Kulissenabschnitt übergeführt, wodurch die Scheibe 55 in Richtung des Pfeiles 64 um die Lagerachse 56 gedreht wird. Der Druckbolzen 58 übt nun infolge des sich dabei ändernden Abstandes des Kraftangriffspunktes P des Druckbolzens 58 an der Stirnfläche der Scheibe 55 nach Erreichen einer Totpunktlage (siehe gestrichelte Darstellung) ein immer stärker werdendes Drehmoment aus, wodurch entsprechend der Beziehung $F_1 \cdot c = F_2 \cdot d$ auf den Zapfen 60 in der Raststellung (Fig. 9) eine Kraft $F_2$ in Richtung Griffkörper im Sinne einer kraftschlüssigen Verbindung der beiden Teile 10 und 4 wirkt, wobei $F_1$ die von der Druckfeder 57 ausgeübte Kraft, c der Abstand des Angriffspunktes P der Federkraft an der Scheibe 55 von der Lagerachse 56 und d der Abstand der Lagerachse 56 vom Zapfen 60 bedeuten. Das Kopfteil 4 wird also nach Erreichen des Totpunktes selbsttätig zum Griffkörper hingezogen und so eine kraftschlüssige Verbindung der beiden Teile hergestellt.

Zum Entrasten der beiden Handstückteile braucht lediglich das Kopfteil 4 in axialer Richtung abgezogen zu werden; der Zapfen 60 wird dabei wieder in der Kulisse 63 zwangsgeführt, dreht somit die Scheibe 55 um die Lagerachse 56, bis schliesslich die in Fig. 8 gezeichnete (entrastete) Lage wieder erreicht wird.

Die Scheibe 55 kann auch so ausgebildet sein, dass das beim Aufsetzen des Kopfteils auf die Griffhülse im Sinne eines Zusammendrückens der beiden Handstückteile wirkende Drehmoment nicht schlagartig ab einem bestimmten Totpunkt wirksam wird, sondern kontinuierlich zunimmt. Dies kann durch eine geeignete Formgebung der Scheibe 55 (z.B. ballige Oberfläche) erreicht werden.

Die axiale und gegen Verdrehung sichernde Führung der Teile 4 und 10 wird durch die zueinander passenden Flächen 61 und 65 erreicht.

Bei der beschriebenen und in den Figuren dargestellten Ausführungsform wird eine Verstellung des Verschiebegetriebes selbsttätig mit dem Aufsetzen eines Kopfteils erzielt. Denkbar ist auch eine Ausführung, bei der der verschiebbare Triebwellenabschnitt durch ein Betätigungselement mechanisch verschoben wird und bei der die benachbarten Triebwellenabschnitte (z.B. Pos. 16 und 25 in Fig. 2) jeweils zwei konzentrische Triebzahnräder aufweisen. Der entsprechende Trieb des Kopfteils kann bei dieser Ausführungsform fester Bestandteil des Antriebs bleiben.

Die in der Fig. 2 dargestellte Hülse 38 braucht mit dem Kopfteil 4 keine bauliche Einheit zu bilden, denn die Hülse wird beim Aufsetzen des Kopfteils, bedingt durch ihre konische Formgebung, gleichzeitig am Grundkörper 10 fixiert, so dass über die Hülse 38 bei deren Drehung auch eine Verdrehung des Grundkörpers 10 erfolgt.

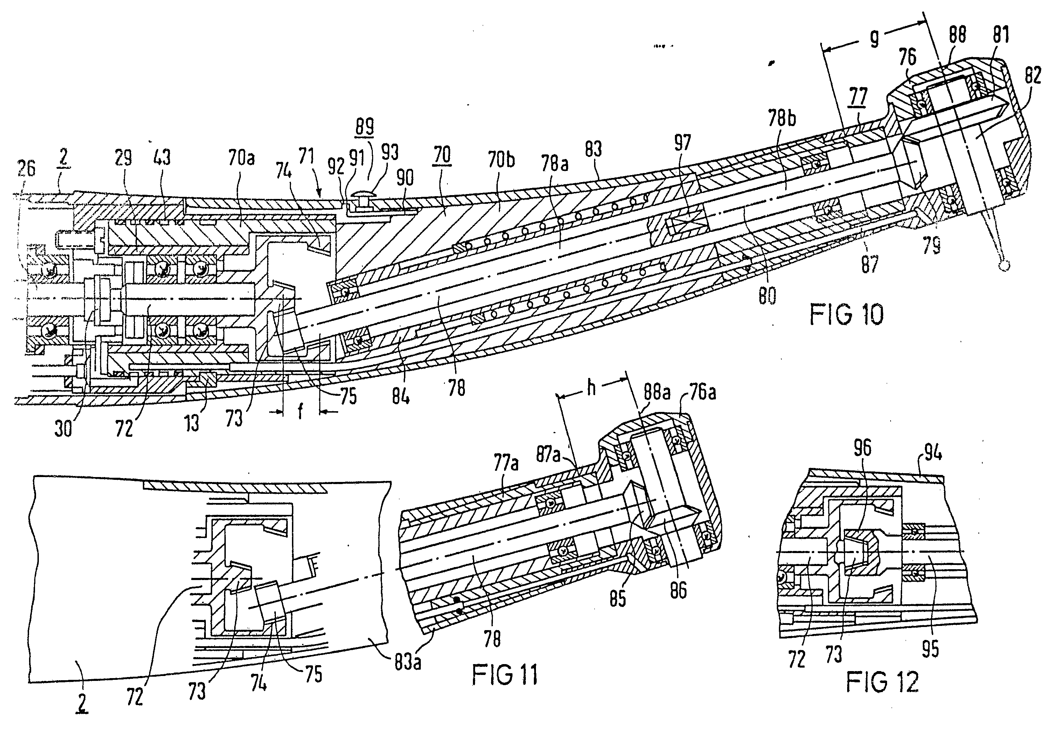

Die Fig. 10 zeigt eine Handstückanordnung, bei der im Gehäuse des Antriebsmotors 2 ein Grundkörper 70 drehbar, axial aber nicht verschiebbar gelagert ist. Die zur Führung und axialen Fixierung des Grundkörpers 70 im Motorgehäuse sowie zur Übertragung der Kühlmedien vom Motor auf die Handstückteile erforderlichen Teile, z.B. Rastbolzen 13 und Ringkanäle 43, entsprechen der in Fig. 2 gezeigten und bereits erläuterten Ausführung. Der Grundkörper 70 ist in zwei Abschnitte 70a, 70b unterteilt, die durch eine etwa an der mit 71 bezeichneten Stelle angeordneten Rastvorrichtung, wie sie in den Fig. 7 bis 9 erläutert ist, kraftschlüssig miteinander verbunden sind. Der Grundkörperabschnitt 70a enthält dabei zweckmässigerweise die in Fig. 7 dem Teil 10 zugeordneten und der Grundkörperabschnitt 70b die dem Teil 4 in Fig. 7 zugeordneten Teile der Rasteinrichtung 66. Im gekuppelten Zustand liegen die miteinander korrespondierenden Stirnflächen der Abschnitte 70a und 70b fest aneinander.

Im Grundkörperabschnitt 70a ist ein Triebwellenabschnitt 72 drehbar gelagert, der mit der Antriebswelle 26 des Antriebsmotors 2 gekuppelt ist. Der Triebwellabschnitt 72 enthält ein aussen verzahntes Kegelrad 73 und ein in einem Abstand f davon angeordnetes innen verzahntes Kegelrad 74. Mit dem aussen verzahnten Kegelrad 73 in Eingriff befindet sich ein Stirnrad 75 eines bis in das Kopfgehäuse 76 des Kopfteils 77 reichenden Triebwellenabschnittes 78. Am kopfteilseitigen Ende des Triebwellenabschnittes 78 ist ein Kegelrad 79 angeordnet, das mit einem Kegelrad 81 eines Triebwellenabschnittes 82 in Eingriff steht, dessen Achse etwa senkrecht zur Triebwellenachse 80 verläuft. Der Triebwellenabschnitt 82 ist in bekannter Weise als Aufnahmehülse für das anzutreibende Werkzeug ausgebildet. Fest mit dem Kopfteil 77 verbunden ist eine den Grundkörper 70 über einen wesentlichen Teil seiner Länge übergreifende Hülse 83. Der Triebwellenabschnitt 78 ist, ähnlich wie in Fig. 2 gezeigt und anhand dieser Figur bereits erläutert, mittels einer Führungshülse 84 längs der Achse 80 verschiebbar geführt, und zwar derart, dass eine Getriebeverzahnung, wie in Fig. 10 und 11 gezeigt, erzielt werden kann. Die Verzahnung der Getrieberäder 73 und 75 ist so abgestimmt, dass im wesentlichen eine Direktübertragung oder eine geringfügige Untersetzung der Drehzahl, beispielsweise im Verhältnis 1,2 : 1 erzielt wird. Um auf die übliche Untersetzung der Drehzahl vom Antriebsmotor 2 auf das Werkzeug im Verhältnis von insgesamt 2,7 : 1 zu kommen, wird an der Getriebeverzahnung 79, 81 im Kopfgehäuse 76 nochmals eine Untersetzung im Verhältnis von 2,2 : 1 vorgenommen.

Bei der in Fig. 11 gezeigten Getriebestellung wird über die Zahnradpaarung 74, 75 eine Übersetzung der Drehzahl erzielt. Die erforderliche Übersetzung von 1 : 3 kann bei diesem Zahneingriff bereits voll erzielt werden oder, wie bei der Untersetzung, nur teilweise hier und dann über eine entsprechende Kegelradpaarung 85, 86 im Kopfgehäuse 76a eines Untersetzungskopfteils 77a erfolgen.

Der exakte Zahneingriff in der einen (Fig. 10) oder anderen Getriebestellung (Fig. 11) wird wie bei der in den Fig. 2 bis 6 beschriebenen Konstruktion erzielt durch eine Anschlagfläche 87 bzw. 87a im Kopfteil 77 bzw. 77a, an der beim Aufsetzen des Kopfteils auf den Grundkörper 70 der Triebwellenabschnitt 78 in der einen oder anderen Getriebestellung mit einer Stirnfläche anliegt. Die Anschlagfläche 87 befindet sich bei dem (Untersetzungs-) Kopfteil 77 in einem Abstand g von der Lagerachse 88 des Kegelrades 81 entfernt; bei dem (Übersetzungs-)Kopfteil 77a ist die Anschlagfläche 87a in einem Abstand h von der Lagerachse 88a entfernt angeordnet. Das Eintauchen des Triebwellenabschnittes in den Grundkörper 70 und der damit zustandekommende Zahneingriff erfolgen wie bei der zuvor beschriebenen Ausführung nach Fig. 2 selbsttätig durch das Aufsetzen des Kopfteils.

Das Kopfteil 77 bzw. 77a mit der fest daran angeordneten Hülse 83 bzw. 83a ist mittels einer betriebsmässig lösbaren Rastvorrichtung 89 am Grundkörperabschnitt 70b gehaltert. Die Rastvorrichtung 89 besteht aus einer am Grundkörperabschnitt 70b befestigten Blattfeder 90, die mit einem Rastbolzen 91 versehen ist, der in eine entsprechende Nut 92 in der Hülse 83 eingreift und so die Hülse zusammen mit dem Kopfteil gegen axiales Abgleiten sichernd mit dem Grundkörper 70 verbindet. Entriegelt werden kann die Vorrichtung durch radiales Betätigen eines Druckknopfes 93. Das Kopfteil mit der fest daran angeordneten Hülse 83 kann nach Entriegeln der Rastvorrichtung 89 vom Grundkörper 70 abgezogen und sterilisiert werden, wobei am Grundkörper 70 der Triebwellenabschnitt 78 verbleibt. Es kann nun ein Kopfteil mit gleicher oder auch mit anderer Getriebeabstufung aufgesetzt werden.

Will man eine gerade Handstückausführung haben, so ist hierzu entweder der Grundkörperabschnitt 70b vom Abschnitt 70a abzunehmen, was durch axiales Auseinanderziehen der beiden Teile 70a und 70b erreicht werden kann (siehe Beschreibung der Rastvorrichtung 66) oder es sind – wenn das Kopfteil mit der Hülse sich noch am Grundkörper 70b befindet – die beiden Handstückteile 2 und 83 ohne Betätigung des Druckkopfes 93 axial auseinanderzuziehen. Die Hülse 83 wird dann zusammen mit dem Kopfteil 77 und dem Grundkörperabschnitt 70b vom Abschnitt 70a getrennt. Auf den Grundkörper 70a kann nun, wie anhand der Fig. 2 bis 6 erläutert, wiederum über eine Rastvorrichtung ein gerades Kopfteil 94 mit einem Triebwellenabschnitt 95 angekuppelt werden, wie dies in Fig. 12 in einer Ausschnittsdarstellung gezeigt ist, wobei das zentrisch angeordnete Kegelrad 73 mit einem entsprechend ausgebildeten Kronenrad 96 in Eingriff kommt.

Um auf die beschriebene Handstückanordnung anstelle des Winkelkopfes 77 ein gerades Kopfteil, ähnlich der Konstruktion nach Fig. 5, aufsetzen zu können, ist der verschiebbare Triebwellenabschnitt 78 mit einer Kupplung 97 versehen, welche den Triebwellenabschnitt in die beiden Triebwellenabschnitte 78a und 78b unterteilt. Entsprechend ist auch die Führungshülse 84 unterteilt.

Um ein klemmfreies Umschalten von der einen in die andere Getriebestellung zu gewährleisten, sind die Triebzahnräder 73 und 74 sowie 25 und 27 der Triebwellenabschnitte 72 und 16 so ausgelegt, dass das Verhältnis ihrer Zähnezahlen ein ganzzahliges Vielfaches beträgt (z.B. 10 : 30).

Wesentliche Vorteile beider beschriebenen Ausführungsformen sind, dass die bisher den jeweiligen Handstücken zugeordneten Triebwellenteile und die entsprechenden Lagerteile zur Lagerung dieser Triebwellenabschnitte nunmehr am antriebsseitigen Teil der Handstückanordnung zugeordnet sind, dass, um eine Unter- und auch Übersetzung der Drehzahlen vom Antriebsmotor auf das Werkzeug zu bekommen, nur ein Handstückteil (Grundkörper 10 bzw. 70) erforderlich ist, an das lediglich die erheblich einfacher zu gestaltenden Kopfteile mit der, wie in Fig. 2 gezeigt, lösbar daran oder, wie in Fig. 10 gezeigt, fest daran angeordneten Hülse aufgesetzt zu werden brauchen. Ein weiterer wesentlicher Vorteil ist, dass das Drehlager für die Medienübertragung vom Antriebsmotor auf das drehbare Handstückteil beim An- und Abkuppeln der Kopfteile nicht getrennt werden muss. Die Drehkupplung verbleibt demnach am Antriebsmotor, wodurch kein erhöhter Verschleiss der O–Ring-Dichtungen auftreten kann. Nachdem bei der in Fig. 10 gezeigten Konstruktion der Triebwellenabschnitt bis in das Kopfgehäuse des Kopfteils hineinragt, und dieser Triebwellenabschnitt nicht dem Kopfteil, sondern dem Antriebsmotor zugeordnet ist, also nach Abziehen des Kopfteils am Antriebsmotor verbleibt, sind somit wesentliche Lager- und Triebwellenteile von einem evtl. Sterilisiervorgang ausgenommen. Die in Fig. 10 gezeigte Lösung hat gegenüber der in Fig. 2 gezeigten Anordnung den Vorteil, dass der eine Grundkörperabschnitt 70b vom im Motorgehäuse gelagerten Grundkörperabschnitt 70a abgenommen werden kann, so dass auch ein gerades Kopfteil mit einem entsprechend ausgebildeten Triebwellenabschnitt, wie in Fig. 12 gezeigt, mit dem Grundkörperabschnitt 70a gekuppelt werden kann. Auch zur Bildung einer geraden Handstückausführung braucht der Grundkörperabschnitt 70a mit der Drehkupplung für die Medienübergabe vom Antriebsmotor nicht getrennt zu werden.

**Patentansprüche**

1. Zahnärztliche Handstückanordnung mit wenigstens zwei mit ihren Achsen unter einem Winkel zueinander angeordneten Triebwellenabschnitten (14, 16; 72, 78) zur Übertragung der Drehbewegung von einem Antriebsmotor (2) auf eine in einem Kopfteil (4) drehbar gelagerte Aufnahmehülse für ein Werkzeug, wobei zumindest einer der beiden Triebwellenabschnitte zwei gleichachsige Triebzahnräder (23, 24; 25, 27; 73, 74) mit unterschiedlicher Zähnezahl aufweist, von denen ein Triebzahnrad jeweils in Eingriff steht mit einem Triebzahnrad des benachbarten Triebwellenabschnittes und wobei Mittel vorgesehen sind, durch die dieser Zahneingriff aufgehoben und mit dem anderen Triebzahnrad ein anderer Zahneingriff hergestellt werden kann, dadurch gekennzeichnet, dass zur Erzielung einer Getriebeabstufung einer der Triebwellenabschnitte (16, 14, 15, 72, 78) in Richtung seiner Achse (6, 7, 8, 80) verschiebbar gelagert ist, wobei durch eine Verschiebung des Triebwellenabschnittes der eine der gleichachsigen Triebzahnräder (25/27, 73/74) mit einem Triebzahnrad (23, 24, 75) des benachbarten Triebwellenabschnittes (14, 78) ausser und der andere in Eingriff kommt.

2. Handstückanordnung nach Anspruch 1, dadurch gekennzeichnet, dass der verschiebbare Triebwellenabschnitt (14, 78) zwischen einem antriebsseitigen (16, 72) und einem kopfteilseitigen Triebwellenabschnitt (15, 82) angeordnet ist.

3. Handstückanordnung nach Anspruch 2, dadurch gekennzeichnet, dass der verschiebbare Triebwellenabschnitt (14, 78) an seinen beiden Enden wenigstens ein Triebzahnrad (23, 31; 75, 79) enthält, von denen jeweils eines (23, 31, 75, 79) davon in Eingriff steht mit einem Triebzahnrad (25, 32, 73, 81) einerseits des antriebsseitigen Triebwellenabschnittes (16, 72) und anderseits des an diesen axial ankuppelbaren kopfteilseitigen Triebwellenabschnittes (15, 82).

4. Handstückanordnung nach Anspruch 2, dadurch gekennzeichnet, dass die gleichachsigen Triebzahnräder (73, 74) am antriebsseitigen Triebwellenabschnitt (72) in Form von zwei in einem axialen Abstand (f) voneinander angeordneten Triebzahnrädern (73, 74) angeordnet sind und dass der verschiebbar gelagerte Triebwellenabschnitt (78) so angeordnet ist, dass sein antriebsseitiges Triebzahnrad (75) wechselweise mit dem einen Triebzahnrad (73) des antriebsseitigen Triebwellenabschnittes (72) in und mit dem anderen Triebzahnrad (74) ausser Eingriff und umgekehrt bringbar ist.

5. Handstückanordnung nach Anspruch 4, dadurch gekennzeichnet, dass die gleichachsigen Triebzahnräder (25, 27; 73, 74) des antriebsseitigen Triebwellenabschnittes (16, 72) ein zentrisch angeordnetes Kegelrad mit Aussenverzahnung und ein konzentrisch angeordnetes Kegelrad mit Innenverzahnung sind.

6. Handstückanordnung nach Anspruch 5, dadurch gekennzeichnet, dass der verschiebbar angeordnete Triebwellenabschnitt (14, 78) in einem Handstückteil (10, 70) geführt ist, der Bestandteil des Antriebsmotors (2) ist und an diesem drehbar gehalten ist, dass das Kopfteil (4, 77) mit einer den Handstückteil (10, 70) übergreifenden Hülse (38, 83) versehen ist und die Hülse (38, 83) mittels einer Rastvorrichtung (89) betriebsmässig lösbar am Handstückteil (10, 70) gehalten ist.

7. Handstückanordnung nach Anspruch 6, dadurch gekennzeichnet, dass das Handstückteil (70) in einen relativ kurzen, den Triebwellenabschnitt (72) mit den beiden gleichachsigen Triebzahnrädern (73, 74) aufnehmenden ersten (70a) und einen demgegenüber längeren, den verschiebbaren Triebwellenabschnitt (78) aufnehmenden zweiten Abschnitt (70b) unterteilt ist, und dass beide Abschnitte (70a, 70b) im Bereich des Zahneingriffes der Triebwellenabschnitte (72, 78) mittels einer die beiden Teile kraftschlüssig aneinanderdrückenden und gegen Verdrehung sichernden Rasteinrichtung (66) lösbar verbunden sind.

8. Handstückanordnung nach Anspruch 6 oder 7, dadurch gekennzeichnet, dass der verschiebbare Triebwellenabschnitt (78) so lang ausgebildet ist, dass er mit seinem kopfteilseitigen Triebzahnrad (79) bis in das Kopfgehäuse (76) des Kopfteils (77) reicht und dort mit einem Triebzahnrad (81) eines im wesentlichen senkrecht zur Achse (80) des verschiebbaren Triebwellenabschnittes (78) angeordneten, die Aufnahmehülse für das anzutreibende Werkzeug aufnehmenden Triebwellenabschnittes (82) kämmt.

9. Handstückanordnung nach Anspruch 8, dadurch gekennzeichnet, dass der im Handstückteil (70) geführte Triebwellenabschnitt (78) durch eine Kupplung (96) in zwei Wellenabschnitte (78a, 78b) unterteilt ist.

10. Handstückanordnung nach Anspruch 1, dadurch gekennzeichnet, dass wenigstens drei mit ihren Achsen (6, 7, 8) unter einem Winkel ($\alpha_1$, $\alpha_2$) zueinander angeordnete Triebwellenabschnitte (14, 15, 16) vorhanden sind, von denen der mittlere (14) in einem Handstückteil (10) axial verschiebbar gelagert ist und an beiden Enden ein oder mehrere Triebzahnräder, vorzugsweise zwei in axialer Richtung in einem Abstand (a, b) voneinander angeordnete Triebzahnräder (23, 24; 31, 33) mit unterschiedlicher Zähnezahl, enthält, von denen jeweils ein Triebzahnrad (23, 31) in Eingriff steht mit einem Triebzahnrad (25, 32) einerseits eines antriebsseitigen (16) und anderseits eines kopfteilseitigen Triebwellenabschnittes (15), wobei bei Verschiebung des mittleren Triebwellenabschnittes (14) der Zahneingriff an beiden Enden aufgehoben und mit den anderen Triebzahnrädern (24, 33) dieses Triebwellenabschnittes (14) ein anderer hergestellt wird.

11. Handstückanordnung nach Anspruch 10, dadurch gekennzeichnet, dass der verschiebbar angeordnete mittlere Triebwellenabschnitt (14) zusammen mit dem antriebsseitigen Triebwellenabschnitt (16) in einem Handstückteil (10) gelagert ist, dessen eines Ende mit einer Führungshülse (11) eines Antriebsmotors (2) drehbar, axial aber feststellbar verbunden ist und an dessen anderem Ende der Kopfteil (4) mit dem kopfteilseitigen Triebwellenabschnitt (15) abnehmbar gehalten ist.

12. Handstückanordnung nach Anspruch 10, dadurch gekennzeichnet, dass die Achsen (6, 7, 8) der drei Triebwellenabschnitte (16, 14, 15) unter einem Winkel ($\alpha_1$, $\alpha_2$) von etwa 8° bis 12°, vorzugsweise 10°, zueinander geneigt angeordnet sind, wobei die Achse (6) des antriebsseitigen Triebwellenabschnittes (16) in oder parallel zur Längssymmetrieachse des Antriebsmotors (2) verläuft.

13. Handstückanordnung nach einem der Ansprüche 1 bis 12, dadurch gekennzeichnet, dass eine Verstellung des verschiebbar geführten Triebwellenabschnittes (14, 78) mechanisch mit Hilfe eines am Handstück (3) angeordneten Betätigungselementes erfolgt.

14. Handstückanordnung nach einem der Ansprüche 1 bis 12, dadurch gekennzeichnet, dass eine Verstellung des verschiebbar geführten Triebwellenabschnittes (14, 78) und der Eingriff der Triebzahnräder (23/25; 24/27, 31/32; 33/50, 33/53, 73/75, 74/75, 79, 81) selbsttätig durch Ankuppeln des den kopfteilseitigen Triebwellenabschnitt (15) aufnehmenden Kopfteils (4, 4a, 4b) an den den verschiebbar geführten Triebwellenabschnitt (14) aufnehmenden Handstückteil (10) erfolgt.

15. Handstückanordnung nach einem der Ansprüche 1 bis 14, dadurch gekennzeichnet, dass der verschiebbar angeordnete Triebwellenabschnitt (14, 78) in einer in einem Grundkörper (10, 70) verschiebbar gelagerten Hülse (17, 84) gelagert ist, die dem Kopfteil (4, 77) zugewandt stirnseitig einen Anschlag (36, 47, 87) bildet für das mit dem Grundkörper (10, 70) verbindbare Kopfteil (4, 77) zur Festlegung des Zahneingriffes, der beim Ankuppeln miteinander in Eingriff kommenden Triebzahnräder (31/32, 25/23, 73/75, 79/81).

16. Handstückanordnung nach Anspruch 15, dadurch gekennzeichnet, dass die Hülse (17, 84) unter der Wirkung einer Feder (34) im Grundkörper (10, 70) verschiebbar gelagert ist und dass Anschlagmittel (37) zur Begrenzung des Verschiebeweges der Hülse (17, 70) vorhanden sind, wobei diese so angeordnet sind, dass sie bei im Eingriff befindlichen Triebzahnrädern (31/32, 73/75) ausser Anlage sind.

17. Handstückanordnung nach einem der Ansprüche 1 bis 16, dadurch gekennzeichnet, dass der verschiebbar angeordnete Triebwellenabschnitt (14) eine in wenigstens zwei Lagern (18) geführte Aufnahmehülse (20) enthält, in die beidseitig Achsen (21, 22), welche die Triebzahnräder (23, 24; 31, 33) aufnehmen, bolzenartig befestigt sind.

18. Handstückanordnung nach einem der Ansprüche 2 bis 17, dadurch gekennzeichnet, dass der antriebsseitige Triebwellenabschnitt (16, 72) in einer im Grundkörper (10, 70) vorzugsweise lösbar angeordneten Führungshülse (29) gelagert ist und mittels einer Kupplung (30) mit der Antriebswelle (26) des Antriebsmotors (2) lösbar verbunden ist.

19. Handstückanordnung nach einem der Ansprüche 1 bis 18, dadurch gekennzeichnet, dass der verschiebbar angeordnete Triebwellenabschnitt (14) jeweils zwei Triebzahnräder (23, 24; 31, 33) an seinen beiden Enden enthält, und die Zahnradpaarung so gewählt ist, dass in der einen Eingriffsstellung eine Direktübertragung (1 : 1) und in der anderen Eingriffsstellung eine Übersetzung der Drehzahl der Triebwellen, vorzugsweise im Verhältnis 1 : 2,4 bis 1 : 2,6 vom motorseitigen Triebwellenabschnitt (16) auf den verschiebbar geführten Triebwellenabschnitt (14) erzielt wird.

20. Handstückanordnung nach Anspruch 19, dadurch gekennzeichnet, dass am kopfteilseitigen Ende des verschiebbar angeordneten Triebwellenabschnittes (14) eine Triebzahnradpaarung (31, 33) vorgesehen ist, mit der in der einen Eingriffsstellung bei Ankupplung eines ersten Kopfteils (4) eine Untersetzung, vorzugsweise im Verhältnis 2,4 : 1 bis 2,6 : 1 und in der anderen Eingriffsstellung bei Ankupplung eines zweiten Kopfteils (4a) eine Direktübertragung der Drehzahlen dieser Triebwelle (14) auf die im Kopfteil (4, 4a) gelagerte Triebwelle (15, 15a) erzielt wird.

21. Handstückanordnung nach einem der Ansprüche 6 bis 19, dadurch gekennzeichnet, dass die am Kopfteil (4, 4a, 4b, 77, 77a) angeordnete Hülse (38, 83) wenigstens einen Teil der Länge des Handstückteils (10, 70) übergreift und am Kopfteil vorzugsweise abnehmbar befestigt ist.

22. Handstückanordnung nach Anspruch 21, dadurch gekennzeichnet, dass die Hülse (38, 83) und/oder das Kopfteil (4, 4a, 4b, 77, 77a) mittels einer Rastvorrichtung (89, 66) mit dem Grundkörper (10, 70) lösbar verbunden ist.

23. Handstückanordnung nach Anspruch 22, dadurch gekennzeichnet, dass die Rastvorrichtung (89, 66) im wesentlichen aus einer Scheibe (55) mit einem exzentrisch gelagerten und mit einer Federkraft belasteten Zapfen (60) besteht, der in eine dazu passende, am anderen Teil (4) angeordnete Kulisse (63) eingreift und dort zwangsgeführt ist und dass die Kulisse (63) so ausgebildet ist, dass bei Erreichen eines bestimmten Axialweges auf den Zapfen (60) eine Kraft ($F_2$) im Sinne einer kraftschlüssigen Verbindung der beiden Teile (10, 4) wirkt.

24. Handstückanordnung nach Anspruch 23, dadurch gekennzeichnet, dass die Kulisse (63) einen zunächst parallelen, und dann unter einem spitzen Winkel ($\alpha_3$) zur Symmetrieachse (8) des zu kuppelnden Teils (4) verlaufenden Kulissenabschnitt (63b) aufweist, wobei auf den Zapfen (60) in diesem Kulissenabschnitt (63b) ein Drehmoment im Sinne der kraftschlüssigen Verbindung der beiden Teile (10, 4) wirkt.

25. Handstückanordnung nach einem der Ansprüche 1 bis 24, dadurch gekennzeichnet, dass der verschiebbar geführte Triebwellenabschnitt (14, 78) patronenartig im Grundkörper (10, 70) angeordnet und als Ganzes auswechselbar ist.

26. Handstückanordnung nach einem der Ansprüche 1 bis 25, dadurch gekennzeichnet, dass das Verhältnis der Zähnezahlen der gleichachsigen Triebzahnräder (25/27, 73/74) ein ganzzahliges Vielfaches bildet.

## Claims

1. A dental hand tool arrangement having at least two drive shaft sections (14, 16; 72, 78), whose axes are arranged at an angle relative to one another, for the transmission of rotary motion from a drive motor (2) to a tool holding sleeve which is rotatably mounted in a head portion (4), wherein at least one of the two drive shaft sections exhibits two co-axial drive gear wheels (23, 24; 25, 27; 73, 74) having different numbers of teeth, one of which drive gear wheels is engaged with a drive gear wheel of the adjacent drive shaft section and wherein means are provided for breaking this engagement and establishing another engagement with the other drive gear wheel, characterised in that in order to achieve a drive graduation, one of the drive shaft sections (16, 14, 15, 72, 78) is mounted so as to be displacable in the direction of its axis (6, 7, 8, 80), a shift of the drive shaft section resulting in one of the co-axial drive gear wheels (25/27, 73/74) disengaging and the other engaging with a drive gear wheel (23, 24, 75) of the adjacent drive shaft section (14, 78).

2. A hand tool arrangement as claimed in claim 1, characterised in that the displacable drive shaft section (14, 78) is arranged between a drive-end drive shaft section (16, 72) and a head-end drive shaft section (15, 82).

3. A hand tool arrangement as claimed in claim 2, characterised in that at its two ends the displacable drive shaft section (14, 78) includes at least one drive gear wheel (23, 31; 75, 79) each of which (23, 31, 75, 79) is engaged with a drive gear wheel (25, 32, 73, 81) of the drive-end drive shaft section (16, 72), on the one hand, and of the head-end drive shaft section (15, 82), which can be axially coupled thereto, on the other hand.

4. A hand tool arrangement as claimed in claim 2, characterised in that the co-axial drive gear wheels 73, 74) are arranged on the drive-end drive shaft section (72) in the form of two drive gear wheels (73, 74) axially spaced from one another by a distance (f), and that the displacably mounted drive shaft section (78) is arranged in such manner that its drive-end drive gear wheel (75) can be alternately engaged with one drive gear wheel (73) and disengaged from the other drive gear wheel (74) of the drive-end drive shaft section (72) and vice versa.

5. A hand tool arrangement as claimed in claim 4, characterised in that the co-axial drive gear wheels (25, 27; 73, 74) of the drive-end drive shaft section (16, 72) consist of a centrally arranged bevel gear with external toothing and a concentrically arranged bevel gear with internal toothing.

6. A hand tool arrangement as claimed in claim 5, characterised in that the displacably arranged drive shaft section (14, 78) is guided in a hand tool component (10, 70) which forms part of the drive motor (2) and is rotatably supported thereon, that the head portion (4, 77) is provided with a sleeve (38, 83) which engages over the hand tool component (10, 70) and the sleeve (38, 83) is held in operationally detachable manner on the hand tool component (10, 70) by means of a locking device (89).

7. A hand tool arrangement as claimed in claim 6, characterised in that the hand tool component (70) is divided into a relatively short first section (70a) which accommodates the drive shaft section (72) with the two co-axial drive gear wheels (73, 74) and a comparatively longer second section (70b) which accommodates the displacable drive shaft section (78), and that in the region of the toothed engagement of the drive shaft sections (72, 78), the two sections (70a, 70b) are detachably connected to one another by means of a locking device (66) which force locks the two components and secures them from rotation.

8. A hand tool arrangement as claimed in claim 6 or claim 7, characterised in that the length of the displacable drive shaft section (78) is such that its head-end drive gear wheel (79) extends into the head housing (76) of the head portion (77) where it engages with a drive gear wheel (81) of a drive shaft section (82) which is arranged so as to be substantially perpendicular to the axis (80) of the displacable drive shaft section (78) and which accommodates the receiving sleeve for the tool which is to be driven.

9. A hand tool arrangement as claimed in claim 8, characterised in that the drive shaft section (78) which is guided in the hand tool component (70) is divided into two shaft sections (78a, 78b) by a coupling (96).

10. A hand tool arrangement as claimed in claim 1, characterised in that at least three drive shaft sections (14, 15, 16) are provided whose axes (6, 7, 8) are arranged at an angle $(\alpha_1, \alpha_2)$ relative to one another and of which the central drive shaft section (14) is mounted in a hand tool component (10) so as to be axially displacable and at each end includes one or more drive gear wheelss, preferably two drive gear wheels (23, 24; 31, 33) which are arranged at an interval (a, b) from one another and which possess a different number of teeth, of which one drive gear wheel (23, 31) in each case engages with a drive gear wheel (25, 32) of a drive-end drive shaft section (16) on the one hand, and of a head-end drive shaft section (15) on the other hand, wherein in the event of a displacement of the central drive shaft section (14), the toothed engagement at the two ends is broken and another toothed engagement is established with the other drive gear wheels (24, 33) of this drive shaft section (14).

11. A hand tool arrangement as claimed in claim 10, characterised in that the displacably arranged central drive shaft section (14), together with the drive-end drive shaft section (16), is mounted in a hand tool component (10), one end of which is connected to a guide sleeve (11) of a drive motor (2) so as to be rotatable yet axially determinable, and at the other end of which the head portion (4) with the head-end drive shaft section (15) is removably mounted.

12. A hand tool arrangement as claimed in claim 10, characterised in that the axes (6, 7 8) of the three drive shaft sections (16, 14, 15) are arranged so as to be inclined relative to one another at an angle ($\alpha_1$, $\alpha_2$) of about 8° to 12°, preferably 10°, the axis (6) of the drive-end drive shaft section (16) running with or parallel to the longitudinal axis of symmetry of the drive motor (2).

13. A hand tool arrangement as claimed in one of claims 1 to 12, characterised in that the displacably guided drive shaft section (14, 78) is adjusted mechanically by means of an operating element arranged on the hand tool (3).

14. A hand tool arrangement as claimed in one of claims 1 to 12, characterised in that an adjustment of the displacably guided drive shaft section (14, 78) and the engagement of the drive gear wheels (23/25; 24/27, 31/32; 33/50, 33/53, 73/75, 74/75, 79/81) is effected automatically by coupling the head portion (4, 4a, 4b) which accommodates the head-end drive shaft section (15) to the hand tool component (10) which accommodates the displacably guided drive shaft section (14).

15. A hand tool arrangement as claimed in one of claims 1 to 14, characterised in that the displacably arranged drive shaft section (14, 78) is mounted in a sleeve (17, 84) which is displacably mounted in a basic body (10, 70) and which, at the end facing towards the head portion (4, 77), forms a stop (36, 47, 87) for the head portion (4, 77) which can be connected to the basic body (10, 70), in order to establish the toothed engagement of the drive gear wheels (31/32, 25/23, 73/75, 79/81) which engage with one another on coupling.

16. A hand tool arrangement as claimed in claim 15, characterised in that the sleeve (17, 84) is mounted in the basic body (10, 70) so as to be displacable under the action of a spring (34), and that stop means (37) are provided which serve to limit the displacement travel of the sleeve (17, 70) and which are so arranged that they are out of contact when the drive gear wheels (31/32, 73/75) are engaged.

17. A hand tool arrangement as claimed in one of claims 1 to 16, characterised in that the displacably arranged drive shaft section (14) contains a receiving sleeve (20) which is supported in at least two mountings (18), in which axles (21, 22) which receive the drive gear wheels (23, 24; 31, 33) are secured on both sides as by bolts.

18. A hand tool arrangement as claimed in one of claims 2 to 17, characterised in that the drive-end drive shaft section (16, 72) is mounted in a guide sleeve (29) which is arranged in the basic body (10, 70), preferably so as to be detachable, and is detachably connected to the drive shaft (26) of the drive motor (2) by means of a coupling (30).

19. A hand tool arrangement as claimed in one of claims 1 to 18, characterised in that the displacably arranged drive shaft section (14) includes two drive gear wheels (23, 24; 31, 33) at each of its two ends and the pairing of the gear wheels being so selected that in one engagement position there is a direct transmission (1 : 1) of the speed of the drive shafts from the motor-end drive shaft section (16) to the displacably mounted drive shaft section (14), whilst in the other engagement position, the transmission is preferably in the ratio 1 : 2.4 to 1 : 2.6.

20. A hand tool arrangement as claimed in claim 19, characterised in that at the head-end of the displacably mounted drive shaft section (14), there is arranged a drive gear wheel pairing (31, 33) by means of which, in the one engagement position, when a first head portion (4) is coupled there is a transmission preferably in the ratio 2.4 : 1 to 2.6 : 1 of the speeds of this drive shaft (14) to the drive shaft (15, 15a) mounted in the head portion (4, 4a), whilst in the other engagement position, when a second head portion (4a) is coupled, there is a direct transmission.

21. A hand tool arrangement as claimed in one of claims 6 to 19, characterised in that the sleeve (38, 83) which is arranged on the head portion (4, 4a, 4b, 77, 77a) engages over at least a part of the length of the hand tool component (10, 70) and is attached to the head portion, preferably so as to be removable.

22. A hand tool arrangement as claimed in claim 21, characterised in that the sleeve (38, 83) and/or the head portion (4, 4a, 4b, 77, 77a) is detachably connected to the basic body (10, 70) by means of a locking device (89, 66).

23. A hand tool arrangement as claimed in claim 22, characterised in that the locking device (89, 66) consists basically of a disc (55) with an eccentrically mounted pin (60) which is subject to spring force and which engages into a corresponding slot (63) in the other portion (4) and is forcibly guided there, and that the slot (63) is so designed that when a specific axial displacement is reached, the peg (60) is subjected to a force ($F_2$) directed to a forcelocking connection of the two components (10, 4).

24. A hand tool arrangement as claimed in claim 23, characterised in that the slot (63) has an initially parallel section (63b) which then runs at an acute angle ($\alpha_3$) to the axis of symmetry (8) of the portion (4) which is to be coupled, the peg (60) in this section (63b) of the slot, being subjected to a torque directed to a force-locking connection of the two components (10, 4).

25. A hand tool arrangement as claimed in one of claims 1 to 24, characterised in that the displacably mounted drive shaft section (14, 78) is arranged in the form of a cartridge in the basic body (10, 70) and can be replaced as a whole.

26. A hand tool arrangement as claimed in one of claims 1 to 25, characterised in that the ratio of the number of teeth of the co-axial drive gear wheels (25/27, 73/74) is a whole number multiple.

**Revendications**

1. Dispositif de pièce à main pour dentisterie, comportant au moins deux sections d'arbres de commande (14, 16; 72, 78) disposées de manière que leurs axes forment entre eux un angle et servant à transmettre un mouvement de rotation d'un moteur d'entraînement (2) à une douille réceptrice pour un outil et montée à articulation sur une pièce de tête (9), l'une au moins des deux sections d'arbres de commande étant pourvue de deux roues dentées coaxiales de commande (23, 24, 25, 27; 73, 74) ayant des dents en nombres différents, et dont l'une des roues dentées de commande est en prise avec une roue dentée de la section d'arbre de commande voisine, alors que des moyens sont prévus à l'aide desquels cet engrénement entre dents peut être supprimè et qu'avec l'autre roue dentée de commande un autre engrènement peut être établi, caractérisé par le fait que pour obtenir un échelonnement de la transmission, l'une des sections d'arbre de commande (13, 14, 15, 72, 78) est montée de façon déplaçable en direction de son axe (6, 7, 8, 80), la réalisation étant telle que pour un déplacement de la section d'arbre de commande, l'une des roues dentées coaxiales de commande (25/27, 73/74) se dégage d'une roue dentée de commande (23, 24, 75) de la section d'arbre de commande voisine (14, 78) et que l'autre engrène avec elle.

2. Dispositif de pièce à main selon la revendication 1, caractérisé par le fait que la section d'arbre de commande déplaçable (14, 78) est disposée entre une section d'arbre de commande (16, 72) et une section d'arbre de commande (15, 82) située du côté de la pièce de tête.

3. Dispositif de pièce à main selon la revendication 2, caractérisé par le fait que la section d'arbre de commande déplaçable (14, 78) comporte á ses deux extrémités au moins une roue dentée de commande (23, 31; 75, 79) dont l'une (23, 31, 75, 79) est en prise avec une roue dentée de commande (25, 32, 73, 81) d'une part de la section d'arbre de commande (16, 72) située du côté de la commande ou de l'entraînement et d'autre part de la section d'arbre de commande (15, 82) située du côté de la pièce de tête et susceptible d'être accouplée à la section d'arbre de commande (16, 72).

4. Dispositif de pièce à main selon la revendication 2, caractérisé par le fait que les roues dentées de commande coaxiales (73, 74) sont disposées sur la section d'arbre de commande (72) sous la forme de deux roues dentées de commande (73, 74), disposées à une distance axiale (f) l'une de l'autre, et que la section d'arbre de commande (78) montée de façon déplaçable est disposée de telle manière que sa roue dentée de commande (75) située du côté de l'entraînement peut être amenée, alternativement, à engrener avec la roue dentée de commande (73) de la section d'arbre de commande (72) située du côté de l'entraînement et à être dégagée de l'autre roue dentée (70), et inversement.

5. Dispositif de pièce à main selon la revendication 4, caractérisé par le fait que les roues dentées coaxiales de commande (25, 27; 73, 74) de la section d'arbre de commande (16, 72) située du côté de l'entraînement sont constituées par un pignon conique disposé en position centrée et pourvu d'une denture extérieure et un pignon conique concentrique pourvu d'une denture intérieure.

6. Pièce à main selon la recendication 5, caractérisée par le fait que la section d'arbre de commande (14, 78) disposée de façon à pouvoir être déplacée, est guidée dans un élément (10, 70) de la pièce à main et qui est un élément constitutif du moteur d'entraînement (2) sur lequel il est monté à rotation, que la pièce de tête (4, 77) est pourvue d'une douille (38, 83) montée sur l'élément (10, 70) de la pièce à main, alors que la douille (38, 83) est montée de façon détachable pendant le service sur l'élément de pièce à main (10, 70), à l'aide d'un dispositif d'encliquetage (89).

7. Dispositif de pièce à main selon la revendication 6, caractérisé par le fait que l'élément (70) de la pièce à main est subdivisé en une premiére section d'arbre de commande (70a) relativement courte et recevant la section d'arbre de commande (72) avec les deux roues dentées coaxiales de commande (73, 74) et en une seconde section (70b) longue par rapport à la première et recevant la section d'arbre de commande déplaçable (78), et que les deux sections (70a, 70b) sont reliées de façon détachable, au niveau de l'engrènement des sections d'arbre de commande (72, 78), à l'aide d'un dispositif d'encliquetage qui applique les deux éléments de façon à assurer une transmission de forces et à les assurer contre un décalage.

8. Dispositif de pièce à main selon la revendication 6 ou 7, caractérisé par le fait que la section de l'arbre de commande déplaçable (78) a une longueur telle qu'avec sa roue dentée de commande (79) située du côté de la pièce de tête, elle s'étende jusqu'à l'intérieur de l'enveloppe (76) de la pièce de tête (77) et y engrène avec une roue dentée de commande (81) d'une section arbre de commande (82) qui est disposée à peu prés perpendiculairement à l'axe (80) de la section d'arbre de commande déplaçable (78) et qui reçoit la douille de montage pour l'outil à entraîner.

9. Dispositif de pièce à main selon la revendication 8, caractérisé par le fait que la section d'arbre de commande (78) guidée dans l'élément (70) de la pièce à main, est subdivisée, par un accouplement (96), en deux sections d'arbres (78a, 78b).

10. Dispositif de pièce à main selon la revendication 1, caractérisé par le fait qu'il est prévu au moins trois sections d'arbres de commande (14, 15, 16) disposées de manière que leurs axes (6, 7, 8) forment entre eux un angle ($\alpha_1$, $\alpha_2$), et parmi lesquelles la section d'arbre de commande médiane (14) est montée dans l'élément (10) de la pièce à main de manière à pouvoir être déplacée axialement et comporte à ses deux extrémités une ou plusieurs roues dentées de commande, préférence deux roues dentées de commande (23, 24; 31, 33) espacées axialement d'une certaine distance (a, b) et comportant un nombre de dents différent, roues dentées don l'une (23, 31) engrène en permanence avec une roue dentée de commande (25, 32), d'une part, d'une section arbre de commande (16) située du côté de l'entraînement et, d'autre part, d'une section d'arbre de commande (15) située du côté de la pièce de tête, la réalisation étant telle que lors du déplacement de la section d'arbre de commande médiane (14), l'engrènement aux deux extrémités est supprimé, un autre engrènement étant établi avec les autres roues dentées de commande (24, 33) de ladite section d'arbre de commande médiane (14).

11. Dispositif de pièce à main selon la revendication 10, caractérisé par le fait que la section d'arbre de commande médiane (14) qui est disposée de façon à pouvoir être déplacée est montée, avec la section d'arbre de commande (16) située du côté de l'entraînement, dans un élément (10) de la pièce à main, dont une extrémité est susceptible de tourner avec une douille de guidage (11) d'un moteur d'entraînement (2) mais est susceptible d'être fixée en position axiale, alors qu'à son autre extrémité la pièce de tête (4), y compris la section d'arbre de commande (15) située du côté de la pièce de tête, est montée de façon détachable.

12. Dispositif de pièce à main selon la revendication 10, caractérisé par le fait que les axes (6, 7, 8) des trois sections d'arbres de commande (16, 14, 15) sont inclinées l'une par rapport à l'autre suivant des angles ($\alpha_1$, $\alpha_2$) d'environ 8° à 12°, de préférence 10°, l'axe (6) de la section d'arbre de commande (16), située du côté de l'entraînement s'étendant le long de l'axe longitudinal de symétrie du moteur d'entraînement (2) ou s'étendant parallèlement à cet axe.

13. Dispositif de pièce à main selon l'une des revendications 1 à 12, caractérisé par le fait que le déplacement de la section d'arbre de commande (14, 78) qui est guidé de façon à pouvoir être déplacé, est opéré mécaniquement à l'aide d'un organe de manoeuvre prévu sur la pièce à main (3).

14. Dispositif de pièce à main selon l'une des revendications 1 à 12, caractérisé par le fait qu'un déplacement de la section d'arbre de commande (14, 78) guidée de façon à pouvoir être déplacée et l'engrènement des roues dentées (23/25; 24/27, 31/32; 33/50, 33/53, 73/75, 74/75, 79/81) a lieu automatiquement par accouplement de la pièce de tête (4, 4a, 4b) qui reçoit la section d'arbre de commande (15) située du côté de la pièce de tête, avec l'élément (10) de la pièce à main qui reçoit la section d'arbre de commande guidée de façon à pouvoir être déplacée.

15. Dispositif de pièce à main selon l'une des revendications 1 à 14, caractérisé par le fait que la section d'arbre de commande (14, 78) qui est disposée de façon à pouvoir être déplacée, est montée dans une douille (17, 84) montée de façon à pouvoir coulisser dans un corps de base (10, 70), douille qui forme une butée frontale voisine de la pièce de tête (4, 77) pour la pièce de tête (4, 77), susceptible d'être reliée au corps de base (10, 70), en vue de déterminer l'engrènement des roues dentées (31/32, 25/23, 73/75, 79/81) qui coagissent entre elles lors de l'accouplement.

16. Dispositif de pièce à main selon la revendication 15, caractérisé par le fait que la douille (17, 84) est montée de façon coulissante dans le corps de base (10, 70) sous l'action d'un ressort (34) et que les moyens de butée (37) sont prévus pour limiter la course de la douille (17, 70), lesdits moyens de butée étant disposés de telle façon qu'ils se détachent lorsque les roues dentées d'entraînement (31/32, 73/75) engrènent.

17. Dispositif de pièce à main selon l'une des revendications 1 à 16, caractérisé par le fait que la section d'arbre de commande (14) est disposée de façon à pouvoir être déplacée, et comporte une douille de réception (20) guidée dans au moins deux paliers (18), et dans laquelle sont fixés, dans ses deux extrémités, à la manière de chevilles, des axes (21, 22) qui reçoivent les roues dentées de commande (23, 24, 31, 33).

18. Dispositif de pièce à main selon l'une des revendications 2 à 17, caractérisé par le fait que la section d'arbre de commande (16, 72) située du côté de l'entraînement est montée dans une douille de guidage (29) disposée, de préférence de façon détachable, dans le corps de base (10, 70) et qu'elle est reliée de façon détachable, et à l'aide d'un accouplement (30), à l'arbre d'entraînement (26) du moteur d'entraînement (2).

19. Dispositif de pièce à main selon l'une des revendications 1 à 18, caractérisé par le fait que la section d'arbre de commande (14) montée de façon à être déplaçable comporte à chacune de ses extrémités deux roues dentées de commande ou d'entraînement (23, 24; 31, 33), et que l'appariement des roues dentées est choisi de telle manière que dans une première position d'engrènement on obtient une transmission directe (1 : 1) et dans une autre position d'engrènement une multiplication de la vitesse de rotation des arbres de commande, de préférence dans le rapport 1 : 2,4 à 1 : 2,6, entre la section d'arbres de commande (16) située du côté du moteur et la section d'arbres de commandes (14) montée de façon coulissante.

20. Dispositif de pièce à main selon la revendication 19, caractérisé par le fait que sur l'extrémité située du côté de la pièce de tête, de la section d'arbres de commande (14) agencée de façon coulissante, est prévu un appariement des roues dentées de commande (31, 33) à l'aide duquel on obtient dans une position d' engrènement et lors de l'accouplement d'une première pièce de tête (4), une démultiplication, de préférence dans le rapport 2,4 : 1 à 2,6 : 1 et dans l'autre position d'engrènement et lors de l'accouplement d'une seconde pièce de tête (4a) une transmission directe des vitesses de rotation entre cet arbre de commande (14) et l'arbre de commande (15, 15a) monté dans la pièce de tête (4, 4a).

21. Dispositif de pièce à main selon l'une des revendications 6 à 19, caractérisé par le fait que la douille (38, 83) qui est disposée sur la pièce de tête (4, 4a, 4b, 77, 77a) déborde au moins une partie de la longueur de l'élément (10, 70) de la pièce à main, et qu'elle est fixée sur la pièce de tête de préférence de façon détachable.

22. Dispositif de pièce à main selon la revendication 21, caractérisé par le fait que la douille (38, 83) et/ou la pièce de tête (4, 4a, 4b, 77, 77a) sont reliées de façon détachable au corps de base (10, 70) au moyen d'un dispositif à encliquetage (89, 66).

23. Dispositif de pièce à main selon la revendication 22, caractérisé par le fait que le dispositif d'encliquetage (89, 66) est constitué essentiellement par une plaque (55) comportant un appendice excentré (60) et chargée par la force d'un ressort, lequel appendice s'adapte et pénètre dans une coulisse (63) prévue sur l'autre élément (4) et y est guidé de façon positive, et que la coulisse (63) est réalisée de telle façon que lorsqu'une course axiale déterminée est atteinte une force ($F_2$) agit sur l'appendice (60) dans le sens d'une liaison à transmission de forces des deux éléments (10, 4).

24. Dispositif de pièce à main selon la revendication 23, caractérisé par le fait que la coulisse comporte une section de coulisse (63) qui s'étend d'abord parallélement à l'axe de symétrie (8) de l'élément (4) à accoupler et ensuite suivant un angle aigue ($\alpha_3$) par rapport audit axe de symétrie (8), la réalisation étant telle que sur l'appendice (60) agit, dans cette section de coulisse (63b), un couple de rotations dans le sens d'une liaison à transmission de forces entre les deux éléments (10, 4).

25. Dispositif de pièce à main selon l'une des revendications 1 à 24, caractérisé par le fait que la section d'arbre de commande (14, 78) qui est guidée de façon coulissante, est disposée à la manière d'une cartouche dans le corps de base (10, 70) et y est remplaçable sous la forme d'un élément global.

26. Dispositif de pièce à main selon l'une des revendications 1 à 25, caractérisé par le fait que le rapport des nombres des dents des roues dentées de commande coaxiales (25/27, 73/74) forme un multiple entier.

FIG 1

FIG 2

0 012 872

FIG 3

FIG 4

FIG 5

FIG 6

FIG 7

FIG 8

FIG 9

FIG 10

FIG 11

FIG 12